(19) **Europäisches Patentamt**

**European Patent Office**

**Office européen des brevets**

(11) **EP 0 690 441 B1**

(12) **EUROPEAN PATENT SPECIFICATION**

(45) Date of publication and mention
of the grant of the patent:
**16.08.2000 Bulletin 2000/33**

(51) Int. Cl.$^7$: **G11B 5/55**

(21) Application number: **95110154.2**

(22) Date of filing: **29.06.1995**

(54) **Disk servo control**

Servosteuerung für Platte

Commande d'asservissement pour disque

(84) Designated Contracting States:
**DE FR GB**

(30) Priority: **29.06.1994 KR 9415260**

(43) Date of publication of application:
**03.01.1996 Bulletin 1996/01**

(73) Proprietor:
**Samsung Electronics Co., Ltd.**
**Suwon-city, Kyungki-do 441-370 (KR)**

(72) Inventor: **Kim, Gwon-Il**
**Boondang-Gu, Seongnam-City, Kyungki-Do (KR)**

(74) Representative:
**Tunstall, Christopher Stephen**
**Harrison Goddard Foote**
**Fountain Precinct**
**Balm Green, Sheffield S1 1RZ (GB)**

(56) References cited:
**EP-A- 0 441 407        WO-A-90/10930**
**GB-A- 2 052 795        US-A- 5 111 349**

• **PATENT ABSTRACTS OF JAPAN vol. 18, no. 298**
**(P-1749) 7 June 1994 & JP-A-06 059 742**
**(HITACHI) 4 March 1994**
• **PATENT ABSTRACTS OF JAPAN vol. 16, no. 89**
**(P-1320) 4 March 1992 & JP-A-03 269 881**
**(MATSUSHITA)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a servo control apparatus and method for controlling the head driver of a disk recording apparatus to move the head to a target position on the disk, upon performance of a seek operation.

In a general disk recording system, a magnetic disk used as a record medium is divided radially to provide a plurality of tracks. Each track is divided into a servo area which stores servo information, used to execute servo control and a data area for recording data. To read and write data at a target position, the head has to move to the target position. The movement of head is called a seek operation. After the head has reached the target track, an operation for accurately placing the head on a data line of the target position is executed, known as a track following operation.

In a method for controlling the position of the head in a disk recording system, control of velocity is performed until the head reaches the target position, and control of position is performed at the target position, so that the head lies on-track.

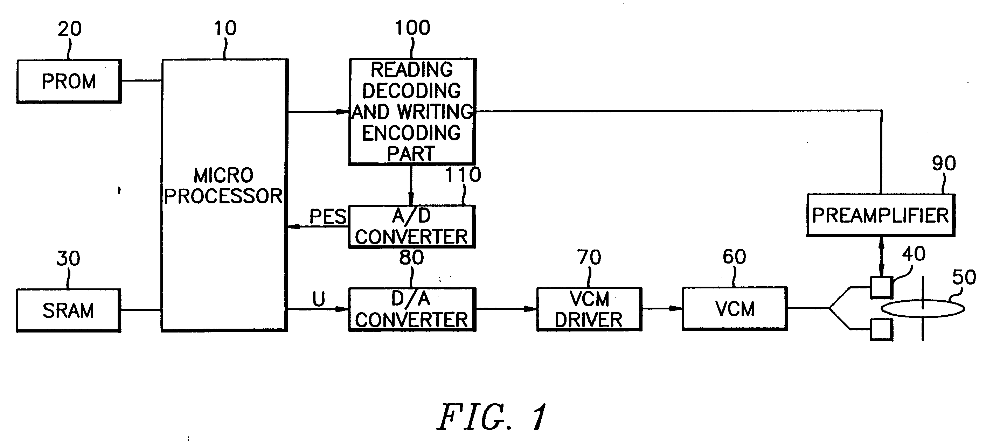

FIG. 1 is a block diagram illustrating servo control of a general disk recording system. In this configuration, a microprocessor 10 is connected to a programmable read only memory 20 (PROM) and a static random access memory 30 (SRAM). A head 40 performs a horizontal movement on a disk 50, and reads/writes data at a target position on the disk 50. A voice coil motor 60 (VCM) serves as an actuator and is connected to the head 40 to activate the head 40 in the horizontal direction on the disk 40. A VCM driver 70 is connected to the VCM 60 and controls the activation thereof in response to a predetermined input current.

A DAC (digital/analog converter) 80 is connected between the microprocessor 10 and the VCM driver 70. The DAC 80 receives a digital control input signal u from the microprocessor 10 and converts the signal into an analog signal to provide an analog-converted signal to the VCM driver 70. A preamplifier 90 is connected to the head 40, amplifies a signal read by the head 40, and outputs the amplified signal. Additionally, the preamplifier 90 amplifies an input signal to be written and outputs the amplified input signal to the head 40.

A reading decoding and writing encoding part 100 is connected to the microprocessor 10 and the preamplifier 90. Under the control of the microprocessor 10, the reading decoding and writing encoding part 100 receives write data from the microprocessor 10 and encodes the data to an analog flux conversion signal, thereby outputting the signal to the preamplifier 90. Also, the reading decoding and writing encoding part 100 decodes and outputs the analog detecting signal received from the preamplifier 90.

An A/D converter (analog/digital converter) 110 is connected to the reading decoding and writing encoding part 100, from which the A/D converter 110 receives the analog detecting signal. The A/D converter converts the analog detecting signal to digital data, that is, a position error signal (PES), and outputs the PES to the microprocessor 10.

In the construction as mentioned above, the microprocessor 10 loads an estimator algorithm and a predetermined control program and executes the overall control operation in the servo control apparatus of the disk recording system.

FIG. 2 is a block diagram illustrating a prior art servo control configuration of a disk recording system. In the figure, a PROM 20 used as a velocity trajectory generator stores velocity command data obtained from the velocity command trajectory at discrete values of to the moving distance.

FIG. 3 is a graph illustrating head moving velocity in an initial acceleration phase to the target position, upon the seek operation of the servo control apparatus.

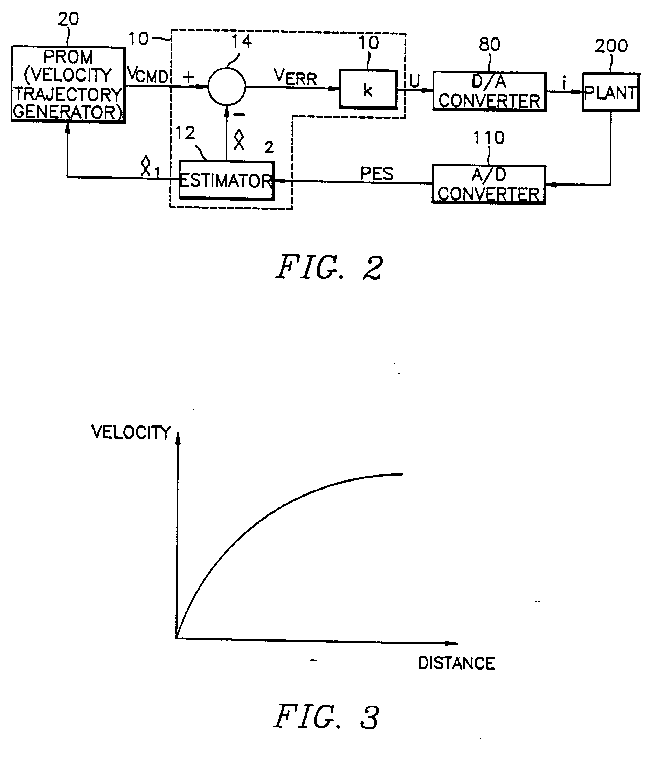

An explanation of the prior art servo control apparatus and method will now be described in detail with reference to FIGS. 2 and 3.

Referring to FIG. 2, servo control of a head driving part in a disk recording system is performed using the following sequential operations. First, the microprocessor 10 detects an analog signal induced from the disk 50 in a plant 200 comprising the disk 50, a spindle motor (not shown), head 40, VCM driver 70, VCM 60, etc. Then, the microprocessor 10 receives the detected analog signal as PES servo information digitized the A/D converter 110, and extracts a current position $\hat{x}_1$ and a current velocity $\hat{x}_2$ of the head with the estimator algorithm. Then, a velocity command value $V_{CMD}$ produced from the current position $\hat{x}_1$ is compared with the current velocity $\hat{x}_2$. A difference value obtained by the comparison is considered as an error velocity $V_{ERR}$ and compensated by a factor k. As a result, the microprocessor 10 finally outputs a control signal u for controlling the VCM driver 70.

The velocity command value $V_{CMD}$ is defined as a velocity, in a velocity command trajectory which mathematically indicates how the velocity should be changed in accordance with the variation of the distance from a target position in order that the head rapidly and stably moves to the target position, considering mechanical and circuitry conditions for the purpose of controlling the disk recording system. An algorithm block producing the velocity command value $V_{CMD}$ is called a velocity trajectory generator.

Upon performance of a seek operation, the servo control construction of the prior art servo control apparatus can be indicated by the following expressions.

$$\dot{X}(ts) = \sqrt{2 \cdot Arm \cdot \frac{K_T}{J} \cdot \sqrt{X(ts)}} \qquad \ldots\ldots\ldots\ldots(1)$$

$$X(ts) = \frac{JR}{K_T K_E} [\dot{X}(ts) - \dot{X}_M \cdot \ln(\frac{\dot{X}(ts)}{\dot{X}_M} + 1)] \qquad \ldots\ldots\ldots\ldots(2)$$

In these expressions, the following nomenclature has been adopted:

X(ts)       the position of the head at sampling time ts relative to the target position,
$\dot{X}$ ts)       the velocity of the head at sampling time ts
$K_T$        torque constant of the head driver,
$K_E$        back EMF factor of the head driver,
J           moment of inertia of the head driver, and
R           total resistance of the head driver.

The expressions (1) and (2) must be pre-calculated with a computer since it is difficult to compute them in real time with a general microprocessor 10 used in the disk recording system. Thus, the calculated values are stored as a table and in the PROM 20. The PROM 20 storing the predetermined number of velocity command data obtained from the velocity command trajectory generator at discrete values of the moving distance.

However, the prior art servo control method and apparatus have a problem that since a ROM capable of storing at least 2K byte to 4K byte is necessary for storing the afore-mentioned calculated values, the cost of production of the system becomes high. Further, for performing a servo control operation by the above table, only velocity values corresponding to discrete moving distances of the head are stored, thereby deteriorating resolution of the velocity command.

Therefore, an object of the present invention is to provide a servo control method of a disk recording system using a velocity value with a high resolution, upon performance of a seek operation.

Another object of the present invention is to provide a servo control apparatus of a disk recording system which can have a velocity value with a high resolution, upon performance of a seek operation and be constructed in a simple manner.

Accordingly, the present invention provides a servo control method for controlling the head driver of a disk recording apparatus to move the head to a target position on the disk, the method comprising the steps of:

   periodically detecting servo information on said disk where said head is positioned in a current sampling period and outputting said servo information as a current position value;
   calculating a moving distance value from said current position value to said target position and a current velocity value and outputting the calculated values;
   deriving a velocity command value for movement of said head in the next sampling period from said moving distance value; and
   subtracting said current velocity value from said velocity command value, converting the subtracted result into an analog signal, and applying the analog converted signal to said head driver;
   **characterised in that** said velocity command value is calculated by substituting said moving distance value into a pre-determined second or higher degree polynomial expression having predetermined factor values.

The predetermined polynomial expression may be a predetermined cubic function of said moving distance value.

The present invention also extends to a servo control apparatus for controlling the head driver of a disk recording apparatus to move the head to a target position on the disk, the apparatus comprising:

   servo information detecting means for periodically detecting servo information on said disk where said head is positioned in a current sampling period and outputting said servo information as a current position value;
   estimating means for estimating a current position value and a current velocity value from said servo information data received from said detecting means;
   calculating means for calculating a moving distance value from said current position value to said target position and for deriving a velocity command value for movement of said head in the next sampling period;

subtracting means for receiving said velocity command value and said current velocity value and outputting a control signal corresponding to the difference between the received values; and

output means for outputting said control signal to said head driver;

**characterised in that** said calculating means derives said velocity command value by substituting said moving distance value into a predetermined second or higher degree polynomial expression having predetermined factor values.

Preferably, said servo information detecting means includes first converting means for converting the detected analogue servo information to digital and for outputting the digital converted servo information as said current position data, and said output means includes second converting means for converting said digital control signal into an analog control signal to be output to said head driver.

Preferably, to allow a greater degree of accuracy in determining velocity control values without increasing computational complexity, the velocity command value is calculated by substituting said moving distance value into one of a group of pre-determined second or higher degree polynomial expression having predetermined factor values, the appropriate member of the group being determined from said moving distance value.

The said group may comprise two such polynomial expressions, the first being used to calculate said velocity command value when said moving distance value is higher than a predetermined threshold and the second being used to calculate said velocity command value when said moving distance value is lower than said predetermined threshold.

The present invention will now be described by way of example with reference to the accompanying drawings, in which like numbers indicate the same or similar elements:

FIG. 1 is a block diagram illustrating a servo control configuration of a general disk recording system;

FIG. 2 is a block diagram illustrating a prior art servo control configuration for a disk recording system;

FIG. 3 is a graph illustrating a head moving velocity in an initial acceleration phase to the target position, upon the seek operation of servo control apparatus;

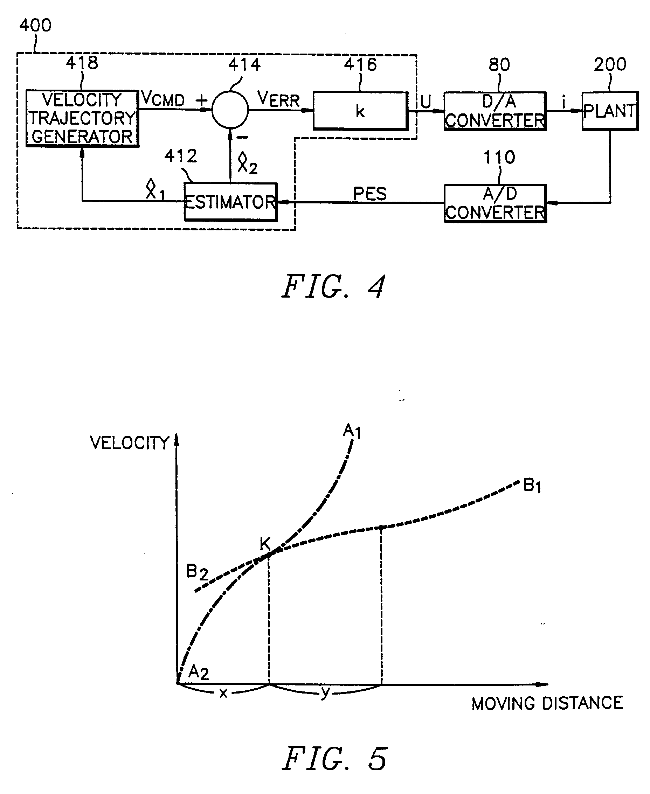

FIG. 4 is a block diagram illustrating a servo control configuration of a disk recording system according to the present invention; and

FIG. 5 is a graph illustrating a velocity command state in an initial acceleration phase to a moving distance to the target position, upon the seek operation of servo control apparatus.

Referring to FIG. 4, a block diagram illustrates a servo control configuration of a disk recording system according to the present invention. A microprocessor 400 includes an estimator 412 for estimating and outputting a current position $\hat{x}_1$ and a current velocity $\hat{x}_2$ by receiving PES servo information from an A/D converter 110. A velocity trajectory generator 418 is provided to calculate a velocity command value from a cubic expression algorithm including predetermined factor values. Different cubic expressions are used depending on the moving distance phase, i.e the value of the moving distance. The velocity trajectory generator substituting the moving distance into the appropriate cubic expression algorithm to calculate the velocity command value.

A subtracter 414 outputs an error velocity $V_{ERR}$ by subtracting the current velocity $\hat{x}_2$ from the velocity command value. The microprocessor 400 outputs a control signal u for controlling the VCM driver 70 by compensating the error velocity $V_{ERR}$ by a control constant k. These various components are included in the microprocessor 200 by a suitable programmed algorithm.

FIG. 5 is a graph illustrating velocity command state in an initial acceleration phase against moving distance to the target position, upon the seek operation of the servo control apparatus. In the seek operation of the disk recording system, as shown in FIG. 3, it can be appreciated that the velocity command state of the target velocity is described in parabolic form by the servo control expressions (1) and (2).

Accordingly, based on the graph illustrating the velocity command state by the prior art servo control expressions (1) and (2), if a target distance phase is established where the variable rate of factor values in the cubic expressions of the graph of FIG. 3 is in a minimum state, as shown in FIG. 5, and if the target distance is subdivided into two at the point K where the target distance phase is divided, it will be understood that phase X is a part of a parabola of a first cubic equation A1 - A2 and phase Y is a part of a parabola of a second cubic equation B1 - B2. These can be indicated by the following equations (3-1) and (3-2).

$$\text{A1 - A2 : velocity command value} = a_1x^3 + a_2x^2 + a_3x + a_4 \tag{3-1}$$

$$\text{B1 - B2 : velocity command value} = b_1x^3 + b_2x^2 + b_3x + b_4 \tag{3-2}$$

The velocity command value can be directly calculated by using the equations (3-1) and (3-2) without calculation of the expressions (1) and (2).

In the equations (3-1) and (3-2), factor values $a_1$, $a_2$, $a_3$, $a_4$, $b_1$, $b_2$, $b_3$, and $b_4$ can be previously defined by calculation by the computer. For example, the factor values may be used with the following values.

| | |
|---|---|
| $a_1 = 1.5492548*10^{-7}$ | $b_1 = 1.0609415*10^{-5}$ |
| $a_2 = -1.6584892*10^{-3}$ | $b_2 = -1.9482181*10^{-2}$ |
| $a_3 = 1.0792343*10$ | $b_3 = 2.2278887*10$ |
| $a_4 = 5.2510289*10^3$ | $b_4 = 2.4743881*10^3$ |

Since the afore-mentioned factor values are unchangeable constant values, if the microprocessor 400 varies only the scale of the factor values for the convenience of calculation, 8 constants are to be stored. In addition to the preferred embodiments of the present invention, the velocity command phase can in the alternative be divided by using quadratic equations or indeed any polynomial expression of order two or more.

The PES servo information is received from the plant 200 through the A/D converter 110 and the microprocessor 400 extracts the current position $\hat{x}_1$ and the current velocity $\hat{x}_2$ of the head, and calculates the moving distance from the current position $\hat{x}_1$ to the target position. Thereafter, the microprocessor 400 calculates a corresponding moving distance phase from the moving distance and the velocity command value $V_{CMD}$ by substituting the moving distance into whichever of the expressions (3-1) and (3-2) includes the factor values of the corresponding moving distance phase. Then, the difference between the velocity command value $V_{CMD}$ and the current velocity $\hat{x}_2$ is considered as the error velocity $V_{ERR}$, which is compensated by the control constant k. As a result, the microprocessor 400 outputs the control signal u for controlling the VCM driver 70.

Thereafter, the D/A converter 80 receives the control signal u and converts the control signal u into an analog signal. The analog converted signal is applied to the VCM driver 70, thereby finally executing servo control.

As previously set forth, the present invention provides a servo control method, in which only factor values for a polynomial expression having at least two or more factors are stored without having a target velocity table. The expressions are used to compute a target velocity value upon performance of a seek operation, thus allowing the construction of the servo control to be more simple and reducing the cost of production. In addition, the present invention provides a servo control method, in which the target velocity value is obtained with the functional calculation from a real moving distance calculated from a current position of the head, thereby producing a velocity value with a high resolution upon performance of the seek operation.

**Claims**

1. A servo control method for controlling the head driver of a disk recording apparatus to move the head to a target position on the disk, the method comprising the steps of:

   periodically detecting servo information on said disk where said head is positioned in a current sampling period and outputting said servo information as a current position value;
   calculating a moving distance value from said current position value to said target position and a current velocity value and outputting the calculated values;
   deriving a velocity command value for movement of said head in the next sampling period from said moving distance value; and
   subtracting said current velocity value from said velocity command value, converting the subtracted result into an analog signal, and applying the analog converted signal to said head driver;
   **characterised in that** said velocity command value is calculated by substituting said moving distance value into a pre-determined second or higher degree polynomial expression having predetermined factor values.

2. The servo control method as defined in claim 1, in which said predetermined polynomial expression is a predetermined cubic function of said moving distance value.

3. The servo control method as defined in claim 1 or claim 2, in which the velocity command value is calculated by substituting said moving distance value into one of a group of predetermined second or higher degree polynomial expression having predetermined factor values, the appropriate member of the group being determined from said moving distance value.

4. The servo control method as defined in claim 3, in which the said group comprises two such polynomial expressions, the first being used to calculate said velocity command value when said moving distance value is higher than a predetermined threshold and the second being used to calculate said velocity command value when said moving distance value is lower than said predetermined threshold.

5. A servo control apparatus for controlling the head driver of a disk recording apparatus to move the head to a target position on the disk, the apparatus comprising:

   servo information detecting means for periodically detecting servo information on said disk where said head is positioned in a current sampling period and outputting said servo information as a current position value;
   estimating means (412) for estimating a current position value and a current velocity value from said servo information data received from said detecting means;
   calculating means (418) for calculating a moving distance value from said current position value to said target position and for deriving a velocity command value for movement of said head in the next sampling period;
   subtracting means (414) for receiving said velocity command value and said current velocity value and outputting a control signal corresponding to the difference between the received values; and
   output means (80) for outputting said control signal to said head driver;
   **characterised in that** said calculating means (418) derives said velocity command value by substituting said moving distance value into a predetermined second or higher degree polynomial expression having predetermined factor values.

6. A servo control apparatus as defined in claim 5, in which:

   said servo information detecting means includes first converting means (110) for converting the detected analogue servo information to digital and for outputting the digital converted servo information as said current position data; and
   said output means includes second converting means (80) for converting said digital control signal into an analog control signal to be output to said head driver.

7. The servo control apparatus as defined in claim 5 or claim 6, in which said predetermined polynomial expression is a predetermined cubic function of said moving distance value.

8. The servo control apparatus as defined in any one of claims 5-7, in which said calculating means (418) comprises means for substituting said moving distance value into one of a group of pre-determined second or higher degree polynomial expression having predetermined factor values, the appropriate member of the group being determined from said moving distance value, to calculate said velocity command value.

9. The servo control apparatus as defined in claim 8, in which the said group comprises two such polynomial expressions, and said calculating means uses the first to calculate said velocity command value when said moving distance value is higher than a predetermined threshold and the second to calculate said velocity command value when said moving distance value is lower than said predetermined threshold.

**Patentansprüche**

1. Servo-Steuerungsverfahren zur Steuerung des Kopf-Treibers von einer Platten-Aufzeichnungsvorrichtung, um den Kopf zu einer Zielposition auf der Platte zu bewegen, wobei das Verfahren die Schritte umfaßt:

   Periodisches Erfassen von Servo-Informationen auf der Platte, wo der Kopf in einer momentanen Abtastperiode positioniert ist, und Ausgeben der Servo-Informationen als ein Momentan-Positionswert;
   Berechnen eines Bewegungsdistanzwertes aus dem Momentan-Positionswert zu der Zielposition sowie eines Momentan-Geschwindigkeitswertes und Ausgeben der berechneten Werte;
   Ableiten eines Geschwindigkeitsbefehlswertes für die Bewegung des Kopfes in die nächste Abtastperiode aus dem Bewegungsdistanzwert; und

Subtrahieren des Momentan-Geschwindigkeitswertes von dem Geschwindigkeitsbefehlswert, Konvertieren des subtrahierten Ergebnisses in ein analoges Signal und Zuführen des analogen konvertierten Signals zu dem Kopf-Treiber;

**dadurch gekennzeichnet**, daß der Geschwindigkeitsbefehlswert berechnet wird, indem der Bewegungsdistanzwert durch einen vorbestimmten Polynomausdruck zweiter oder höherer Ordnung ersetzt wird, der vorbestimmte Faktorwerte hat.

2. Servo-Steuerungsverfahren nach Anspruch 1, bei dem der vorbestimmte Polynomausdruck eine vorbestimmte kubische Funktion des Bewegungsdistanzwertes ist.

3. Servo-Steuerungsverfahren nach Anspruch 1 oder 2, bei dem der Geschwindigkeitsbefehlswert berechnet wird, indem der Bewegungsdistanzwert durch einen von einer Gruppe von vorbestimmten Polynomausdrücken zweiter oder höherer Ordnung ersetzt wird, die vorbestimmte Faktorwerte haben, wobei das geeignete Element der Gruppe aus dem Bewegungsdistanzwert bestimmt wird.

4. Servo-Steuerungsverfahren nach Anspruch 3, bei dem die Gruppe zwei solcher Polynomausdrücke enthält, wobei der erste verwendet wird, um den Geschwindigkeitsbefehlswert zu berechnen, wenn der Bewegungsdistanzwert größer als ein vorbestimmter Grenzwert ist, und der zweite verwendet wird, um den Geschwindigkeitsbefehlswert zu berechnen, wenn der Bewegungsdistanzwert kleiner ist als der vorbestimmte Grenzwert.

5. Servo-Steuerungsvorrichtung zur Steuerung des Kopf-Treibers von einer Platten-Aufzeichnungsvorrichtung, um den Kopf zu einer Zielposition auf der Platte zu bewegen, wobei die Vorrichtung aufweist:

eine Servo-Informationserfassungseinrichtung zum periodischen Erfassen von Servo-Informationen auf der Platte, wo der Kopf in einer momentanen Abtastperiode positioniert ist, und Ausgeben der Servo-Informationen als ein Momentan-Positionswert;

eine Schätzeinrichtung (412) zum Schätzen eines Momentan-Positionswertes und eines Momentan-Geschwindigkeitswertes aus den Servo-Informationsdaten, die von der Erfassungseinrichtung erhalten werden;

eine Berechnungseinrichtung (418) zum Berechnen eines Bewegungsdistanzwertes aus dem Momentan-Positionswert zu der Zielposition und zum Ableiten eines Geschwindigkeitsbefehlswertes für die Bewegung des Kopfes in die nächste Abtastperiode;

eine Subtraktionseinrichtung (414), um den Geschwindigkeitsbefehlswert und den Momentan-Geschwindigkeitswert zu erhalten und um ein Steuerungssignal auszugeben, das der Differenz zwischen den erhaltenen Werten entspricht; und

eine Ausgabeeinrichtung (80), um das Steuerungssignal zu dem Kopf-Treiber auszugeben;

**dadurch gekennzeichnet**, daß die Berechnungseinrichtung (418) den Geschwindigkeitsbefehlswert ableitet, indem der Bewegungsdistanzwert durch einen vorbestimmten Polynomausdruck zweiter oder höherer Ordnung ersetzt wird, der vorbestimmte Faktorwerte hat.

6. Servo-Steuerungsvorrichtung nach Anspruch 5, bei der:

die Servo-Informationserfassungseinrichtung eine erste Konvertierungseinrichtung (110) enthält, um die erfaßten analogen Servo-Informationen in digitale Werte zu konvertieren und um die digitalen konvertierten Servo-Informationen als die Momentan-Positionsdaten auszugeben; und

die Ausgabeeinrichtung eine zweite Konvertierungseinrichtung (80) enthält, um das digitale Steuerungssignal in ein analoges Steuerungssignal zu konvertieren, um es an den Kopf-Treiber auszugeben.

7. Servo-Steuerungsvorrichtung nach Anspruch 5 oder nach Anspruch 6, bei der der vorbestimmte Polynomausdruck eine vorbestimmte kubische Funktion des Bewegungsdistanzwertes ist.

8. Servo-Steuerungsvorrichtung nach einem der Ansprüche 5-7, bei der die Berechnungseinrichtung (418) eine Einrichtung aufweist, um den Bewegungsdistanzwert durch einen aus einer Gruppe von vorbestimmten Polynomausdrücken zweiter oder höherer Ordnung zu ersetzen, die vorbestimmte Faktorwerte haben, wobei das geeignete Element der Gruppe aus dem Bewegungsdistanzwert bestimmt wird, um den Geschwindigkeitsbefehlswert zu berechnen.

9. Servo-Steuerungsvorrichtung nach Anspruch 8, bei der die Gruppe zwei solcher Polynomausdrücke enthält, und die Berechnungseinrichtung den ersten verwendet, um den Geschwindigkeitsbefehlswert zu berechnen, wenn der Bewegungsdistanzwert größer als ein vorbestimmter Grenzwert ist, und den zweiten, um den Geschwindigkeitsbefehlswert zu berechnen, wenn der Bewegungsdistanzwert kleiner als der vorbestimmte Grenzwert ist.

**Revendications**

1. Procédé de commande d'asservissement pour la commande du dispositif d'entraînement de la tête d'un dispositif d'enregistrement de disques pour amener la tête dans une position de consigne sur le disque, le procédé comprenant les étapes consistant à:

   détecter périodiquement une information d'asservissement sur ledit disque, où ladite tête est positionnée pendant une période d'échantillonnage actuelle, et délivrer ladite information d'asservissement en tant que valeur de position actuelle;
   calculer une valeur de distance de déplacement depuis ladite valeur de position actuelle jusqu'à ladite position de consigne, et une valeur de vitesse actuelle et délivrer les valeurs calculées;
   dériver une valeur de commande de vitesse pour déplacer ladite tête pendant la période d'échantillonnage suivante à partir de ladite valeur de distance de déplacement;
   soustraire ladite valeur de vitesse actuelle de ladite valeur de commande de vitesse, convertir le résultat soustrait en un signal analogique et appliquer le signal converti sous forme analogique audit dispositif d'entraînement de la tête;
   caractérisé en ce que ladite valeur de commande de vitesse est calculée par introduction de ladite valeur de distance de déplacement dans une expression polynomiale prédéterminée du second degré ou d'un degré plus élevé dont les facteurs ont des valeurs prédéterminées.

2. Procédé de commande d'asservissement selon la revendication 1, selon lequel ladite expression polynomiale prédéterminée est une fonction cubique prédéterminée de ladite valeur de distance de déplacement.

3. Procédé de commande d'asservissement selon la revendication 1 ou la revendication 2, selon lequel la valeur de commande de vitesse est calculée par introduction de ladite valeur de distance de déplacement dans une expression faisant partie d'un groupe d'expressions polynomiales prédéterminées du second degré ou d'un degré plus élevé dont les facteurs possèdent des valeurs prédéterminées, l'élément approprié du groupe étant déterminé à partir de ladite valeur de distance de déplacement.

4. Procédé de commande d'asservissement selon la revendication 3, selon lequel ledit groupe comprend deux expressions polynomiales de ce type, la première étant utilisée pour calculer ladite valeur de commande de vitesse lorsque ladite valeur de distance de déplacement est supérieure à un seuil prédéterminé, et la seconde étant utilisée pour calculer ladite valeur de commande de vitesse lorsque ladite valeur de distance de déplacement est inférieure audit seuil prédéterminé.

5. Dispositif de commande d'asservissement pour commander le dispositif d'entraînement de la tête de commande d'enregistrement de disques pour amener la tête dans une position de consigne sur le disque, le dispositif comprenant:

   des moyens de détection de l'information d'asservissement pour détecter périodiquement une information d'asservissement sur ledit disque, où ladite tête est positionnée pendant une période d'échantillonnage actuelle, et délivrer ladite information d'asservissement en tant que valeur de position actuelle;
   des moyens d'estimation (412) pour estimer une valeur de position actuelle et une valeur de vitesse actuelle à partir desdites données d'information d'asservissement reçues desdits moyens de détection;
   des moyens de calcul (418) pour calculer une valeur de distance de déplacement depuis ladite valeur de position actuelle jusqu'à ladite position de consigne, et pour dériver une valeur de commande de vitesse pour le déplace ment de ladite tête pendant la période d'échantillonnage suivante;
   des moyens soustracteurs (414) pour recevoir ladite valeur de commande de vitesse et ladite valeur de vitesse actuelle et délivrer un signal de commande correspondant à la différence entre les valeurs reçues; et
   des moyens de sortie (80) pour délivrer ledit signal de commande audit dispositif d'entraînement de la tête;
   caractérisé en ce que lesdits moyens de calcul (418) dérivent ladite valeur de commande de vitesse par introduction de ladite valeur de distance de déplacement dans une expression polynomiale prédéterminée du second degré ou d'un degré plus élevé, dont les facteurs possèdent des valeurs prédéterminées.

**6.** Dispositif de commande d'asservissement selon la revendication 5, dans lequel:

lesdits moyens de détection de l'information d'asservissement incluent des premiers moyens de conversion (110) pour convertir l'information d'asservissement analogue détectée sous forme numérique et pour délivrer l'information d'asservissement convertie sous forme numérique en tant que lesdites données de position actuelle; et

lesdits moyens de sortie comprennent des seconds moyens de conversion (80) pour convertir ledit signal de commande numérique sous la forme d'un signal de commande analogique devant être délivré audit dispositif d'entraînement de la tête.

**7.** Dispositif de commande d'asservissement selon la revendication 5 ou la revendication 6, dans lequel ladite expression polynomiale prédéterminée est une fonction cubique prédéterminée de ladite valeur de distance de déplacement.

**8.** Dispositif de commande d'asservissement selon l'une quelconque des revendications 5-7, dans lequel lesdits moyens de calcul (418) comprennent des moyens pour introduire ladite valeur de distance de déplacement dans une expression faisant partie d'un groupe d'expression polynomiale prédéterminée du second ordre ou d'un ordre plus élevé, dont les facteurs possèdent des valeurs prédéterminées, l'élément approprié du groupe étant déterminé à partir de ladite valeur de distance de déplacement, pour le calcul de ladite valeur de commande de vitesse.

**9.** Dispositif de commande d'asservissement selon la revendication 8, dans lequel ledit groupe comprend deux expressions polynomiales de ce type, et lesdits moyens de calcul utilisent la première pour calculer ladite valeur de commande de vitesse lorsque ladite valeur de distance de déplacement est supérieure à un seuil prédéterminé, et la seconde pour calculer ladite valeur de commande de vitesse lorsque ladite valeur de distance de déplacement est inférieure audit seuil prédéterminé.

EP 0 690 441 B1

20 PROM

10 MICRO PROCESSOR

100 READING DECODING AND WRITING ENCODING PART

90 PREAMPLIFIER

110 A/D CONVERTER
PES

30 SRAM

80 D/A CONVERTER
U

70 VCM DRIVER

60 VCM

40

50

*FIG. 1*

FIG. 2

FIG. 3

FIG. 4

FIG. 5